# EUROPÄISCHE PATENTSCHRIFT

(11) **EP 1 034 192 B1**
(45) Veröffentlichungstag und Bekanntmachung des Hinweises auf die Patenterteilung: **11.02.2004**
(21) Anmeldenummer: 98962339.2
(22) Anmeldetag: 13.11.1998
(51) Int. Cl.: C08F 6/00

(54) **VERFAHREN ZUR HERSTELLUNG VON WASSERLÖSLICHEN BZW. WASSERQUELLBAREN POLYMERISATEN MIT SEHR NIEDRIGEM RESTMONOMERGEHALT, DANACH HERGESTELLTE PRODUKTE UND DEREN VERWENDUNG**
METHOD FOR PRODUCING WATER-SOLUBLE OR WATER-SWELLABLE POLYMERIZATES WITH A VERY LOW RESIDUAL MONOMER CONTENT, PRODUCTS PRODUCED ACCORDING TO THIS METHOD AND THE USE THEREOF
PROCEDE POUR PRODUIRE DES POLYMERES HYDROSOLUBLES OU POUVANT GONFLER DANS L'EAU, PRESENTANT UNE TRES FAIBLE TENEUR EN MONOMERES RESIDUELS, PRODUITS AINSI OBTENUS ET LEUR UTILISATION

(30) Priorität: 25.11.1997 DE 19752128
(43) Veröffentlichungstag der Anmeldung: 13.09.2000
(73) Patentinhaber: Stockhausen GmbH & Co. KG, 47705 Krefeld (DE)
(72) Erfinder: CHMELIR, Miroslav, D-47803 Krefeld (DE); DAHMEN, Kurt, D-41209 Mönchengladbach (DE)
(86) Internationale Anmeldenummer: PCT/EP1998/007290
(87) Internationale Veröffentlichungsnummer: WO 1999/026988

(56) Entgegenhaltungen:
- EP-A- 0 303 518
- EP-A- 0 505 163
- DE-A- 3 724 709
- DE-A- 19 529 348
- US-A- 4 766 173

## Beschreibung

Die Erfindung betrifft ein Verfahren zur Herstellung synthetischer Polymerisate auf Basis der Acrylsäure und ihrer Derivate mit sehr niedrigem Restmonomergehalt. Die Polymerisate weisen ein hohes Molekulargewicht auf und sind entweder wasserlöslich oder besitzen ein hohes Aufnahmevermögen für Wasser, wäßrige Lösungen und Körperflüssigkeiten

Verschiedene synthetische Polymerisate, die ein Absorptionsvermögen für Wasser und Körperflüssigkeiten aufweisen, sind in zahlreichen Patenten beschrieben: z.B. vernetzte Polymere und Copolymere auf Acryl- oder Methacrylsäurebasis (US 4,018,951, US 4,066,583, US 4,062,817, US 4,066,583, DE-OS 26 13 135, DE 2 712 043, DE 2 813 634) oder Acrylamidopropansulfonsäurecopolymerisate (DE 31 24 008). Diese Absorptionsmittel sind praktisch wasserunlöslich und absorbieren im Gleichgewicht das Vielfache ihres Gewichts an Wasser, Urin oder anderen wäßrigen Lösungen. Neben dem hohen Aufnahmevermögen werden auch weitere Eigenschaften der synthetischen Absorptionsmittel wie z.B. niedriger Restmonomergehalt, niedriger Anteil an wasserlöslichen Anteilen und hohe Gelfestigkeit der gequollenen Polymerpartikel in einigen Patentschriften erwähnt.

Bei der Herstellung von hochmolekularen wasserlöslichen oder wasserquellbaren, d.h. teilvernetzten Polymerisaten und Mischpolymerisaten zeigt sich, daß eine vollständige Umwandlung der Monomeren - vor allem der Monomeren auf Acrylsäurebasis - nicht möglich ist. Im technischen Maßstab werden üblicherweise Restmonomergehalte von 0,1 bis 0,5 Gew% im Polymerisat beobachtet.

Die Toxizität der im Polymerisat verbleibenden Monomeren ist allgemein bekannt, es wäre daher ein Verfahren zur Herstellung von Polymerisaten und Mischpolymerisaten, die praktisch monomerfrei sind, sehr zweckmäßig. Da es bisher nicht möglich war, ein Polymerisationsverfahren so zu führen, daß praktisch keine Restmonomeren mehr verbleiben, wurde bisher versucht, die toxischen Restmonomeren durch Umwandlung in ihre unschädliche Derivate aus dem Polymerisat zu entfernen. So wurden in den DE-AS 1 070 377 und US 2,960,486 die wäßrigen Lösungen von hochmolekularen Acrylamidpolymerisaten mit Natriumdisulfitlösung vermischt und bei 80 bis 120°C getrocknet. Diese Verfahren setzen eine Verarbeitung des Polymerisats in sehr verdünnter (2 bis 3%iger) Polymerlösung voraus, was unwirtschaftlich ist, und daher wurden diese Methoden in der Praxis kaum angewandt.

Die Behandlung von Polymergel mit wäßriger Lösung von Natriumbisulfit oder - metabisulfit wurde in der US 3,755,280 und mit einem festen Alkalisulfit in der EP 175 554 beschrieben, wobei Restmonomergehalte von 0,03 bis 0,3 Gew% erhalten wurden. Zum gleichen Zweck wurden in der JP-PS 56/103207 ebenfalls Bisulfite, Sulfite und Pyrosulfite verwendet. Gasfömiges Schwefeldioxid wurde zur Herabsetzung der Acrylamidkonzentration in einem Emulsionspolymerisat in der US 3,780,006 benutzt. In der EP 505 163 wurden Polymerisate nach der beendeten Polymerisation mit einer Kombination von Metabisulfit und oberflächenaktiven Substanz (HLB von 3 bis 40) behandelt, wodurch Restmonomergehalte bis zu 10 ppm gesenkt werden. Für diese Nachbehandlung der Polymergele wurden 2 bis 5 Gew% Metabisulfit (bez. auf das Polymergel mit 40 % wS, d.h. 5 bis 12,5 Gew% Metabisulfit bez. auf das trockene Polymerisat) notwendig um die gewünschte Restmonomersenkung zu erreichen. Diese hohen Mengen an Zusatzstoffen können sich sehr negativ auf die anwendungstechnischen Eigenschaften auswirken.

EP 303 518 A2 beschreibt Verfahren zur Herstellung von absorbierenden Polymeren auf Basis von Acrylsäure/Acrylamid, bei dem erfindungsgemäß ein hoher Neutralisationsgrad von 70 bis 100 Mol%, eine hohe Monomerkonzentrationen von mindestens 50% und eine Kombination aus thermisch zerfallenden Azo- und Redox-Initiatoren eingesetzt wird. Durch diese Bedingungen verläuft die Reaktion in der Weise, daß bereits während der Polymerisation alles Ansatzwasser verdampft, so daß eine nachfolgende Trocknung unterbleiben kann und die Restmonomergehalte unter 500 ppm, bevorzugt unter 200 ppm absinken sollen. Restmonomergehalte der Beispielsversuche sind nicht angegeben.

In der DE 37 24 709 A1 wird ein Verfahren zur Herstellung von Polymerisaten mit niedrigem Restmonomergehalt beschrieben, bei dem die Polymerisate nach ihrer Herstellung in gequollener Form als Gel oder in Lösung mit Verbindungen umgesetzt werden, die mit den Doppelbindungen der Restmonomeren bei 50 bis 150°C reagieren.

In der US 4,766,173 erfolgt die Reduzierung von Acrylsäure-Restmonomer in Polymerisaten durch die nachträgliche Behandlung der Polymerisate mit Aminosäuren vom Typ Lysin und Cystein bei Temperaturen ab 80°C.

WO 94/20547 beschreibt Zusätze wie Bromat und Chlorat zur Polymerisationslösung und eine nachfolgende Erhitzung des fertigen Polymers, bei dem durch die Zusätze u.a. eine Reduzierung des Restmonomers erfolgt. Die Zugabe der Bromate und Chlorate kann auch nach der Polymerisation erfolgen. Trotz dieser Maßnahmen liegt der Restmonomergehalt der Polymerisate zwischen etwa 135 und 1100 ppm.

Die vorstehend beschriebenen Verfahren des Standes der Technik ermöglichen zwar eine erhebliche Reduzierung der Restmonomeren, sind jedoch mit einigen Nachteilen verbunden, wie die Geruchsbelästigung durch frei werdendes Schwefeldioxid, Korrosion der Anlage durch Schwefeloxidfolgeprodukte (z.B. schweflige Säure und Schwefelsäure sowie deren Salze im sauren Medium). Vor allem aber ist jede Nachbehandlung des fertig hergestellten Polymerisats ein zusätzlicher technologischer Schritt, der weitere Apparate bzw. Geräte und nicht unerheblichen Zeitaufwand verlangt, wobei auch die nicht unerhebliche Menge an Zusatzstoff im Endprodukt verbleibt und anwendungstechnische Eigenschaften negativ beeinflussen kann.

Die Aufgabe der Erfindung ist es daher, die als Flockungs- oder Absorptionsmittel oder zu anderen Zwecken eingesetzten synthetischen Polymerisate von an sich bekannter chemischer Zusammensetzung mit hohem Molekulargewicht oder hohem Rückhaltevermögen für Wasser, wäßrige Flüssigkeiten und Körperflüssigkeiten unter bestimmten spezifischen Bedingungen herzustellen, um Endprodukte mit extrem niedrigem Restmonomergehalt und guten anwendungstechnische Eigenschaften zu erhalten, ohne daß eine Nachbehandlung der hergestellten Polymere mit weiteren chemischen Verbindungen notwendig wäre.

Es wurde nun überraschenderweise gefunden, daß synthetische Polymerisate auf Acrylsäurebasis mit gewünschten Eigenschaften und extrem niedrigem Restmonomergehalt durch radikalische Polymerisation in wäßriger Lösung hergestellt werden können, wenn beim Ansetzen der zu polymerisierenden Monomermischung mindestens eine basische Stickstoffverbindung, wie z.B. Ammoniak zur teilweisen oder völligen Neutralisation saurer Monomerbestandteile in einem Bereich des Neutralisationsgrades von 10 bis 100% verwendet wird und nachträglich eine Erwärmung der Polymerisate bei 120 bis 240°C, bevorzugt bei 140 bis 180°C stattfindet. Die Polymerisate nach dem erfindungsgemäßen Verfahren weisen einen äußerst niedrigen Gehalt an Restmonomeren auf, der vorzugsweise unter 50 ppm, insbesondere unter 30 ppm liegt. Von besonderer Bedeutung ist die Tatsache, daß das als toxikologisch bedenklich eingestufte Acrylamid auf einen Restgehalt von unter 10 ppm abgesenkt werden kann.

Als basische Stickstoffverbindungen werden zur Neutralisation beispielsweise Ammoniak bzw. Ammoniumhydroxid, aliphatische Mono- und Polyamine, insbesondere aliphatische C₁- bis C₁₀-Amine, cycloaliphatische Mono- und Polyamine, insbesondere cycloaliphatische C₆- bis C₁₂-Amine, aromatische Mono- und Polyamine, insbesondere aromatische C₆- bis C₁₂-Amine, heterocyclische Amine, Hydroxylamin und Alkanolamine, wie etwa Monoethanolamin und Diethanolamin bzw. deren Gemische verwendet. Besonders bevorzugte Stickstoffverbindungen sind Ammoniak bzw. Ammoniumhydroxid, Ethanolamin und Diethanolamin.

Die Stickstoffverbindungen können in Form der freien Base zur völligen oder teilweisen Neutralisation der sauren Monomerbestandteile eingesetzt werden. Dabei ist es auch möglich, daß ein Teil der sauren Monomere durch andere Basen neutralisiert wird und die Stickstoffverbindung gegenüber diesen anderen Basen im molaren Unterschuß vorhanden ist. Vorteilhaft ist die Stickstoffverbindung zur Neutralisation der sauren Monomerkomponente in einem Bereich des Neutralisationsgrades von 10 bis 100% anwendbar.

Um eine wirtschaftliche Herstellung der Polymerisate zu erreichen, wird die Polymerisation mit solchen Initiatoren durchgeführt, die bei relativ niedrigen Temperaturen zerfallen. Als übliche Initiatoren werden anorganische oder organische Peroxide oder Redoxsysteme verwendet. Bei der Polymerisation in wäßriger Phase werden anorganische Peroxide wie Peroxidisulfate alleine oder in Verbindung mit einer reduzierenden Komponente häufig benutzt.

Die Polymerisation kann mit einem Redox-Initiatorsystem oder durch Photopolymerisation gestartet werden. Das Redox-Initiatorsystem besteht meistens aus zwei Komponenten, einer anorganischen oder organischen peroxidhaltigen Verbindung und einer reduzierenden Komponente, wie z.B. Sulfit, Hydrosulfit, Thiosulfat, Sulfinsäure, Ascorbinsäure und ihre Salze, Kupfer-, Eisen(II)- oder Mangansalze. Als anorganische Peroxidverbindungen können die Alkalimetall- oder Ammoniumperoxide, wie z.B. Kaliumperoxidisulfat, Wasserstoffperoxid oder organische Peroxide wie z.B. Benzoylperoxid, Butylhydroperoxid verwendet werden. Meistens wird die Polymerisation mit einem Redox-Initiatorsystem gestartet. Zusätzlich zu diesem Initiatorsystem können noch weitere Initiatoren verwendet werden. Für die Photopolymerisation, die durch das UV-haltige Licht iniziiert werden kann, werden sog. Photoinitiatoren wie z.B. Benzoin oder Benzoinderivate, wie Benzoinether, Benzil und seine Derivate, wie z.B. Benzilketale, Acryldiazoniumsalze, Azoinitiatoren wie z.B. 2,2'-Azobis(isobutyro)nitril, 2,2'-Azobis(2-amidinopropan)-hydrochlorid oder Acetophenonderivate verwendet. Die Mengen an der peroxidhaltigen Komponente und an der reduzierenden Komponente können sich im Bereich von 0,0005 bis 0,5 Gew%, vorzugsweise von 0,001 bis 0,1 Gew% (bez. auf die Monomerlösung) und an den Photoinitiatoren im Bereich von 0,001 bis 0, 1 Gew%, bevorzugt von 0,002 bis 0,05 Gew% (bez. auf die Monomerlösung) bewegen.

Als Monomere kommen in Frage in erster Linie Acrylsäure, Acrylamid, Methacrylsäure und Methacrylamid, die alleine zu Homopolymerisaten oder zu Mischpolymerisaten polymerisiert werden, ferner aber auch andere wasserlösliche Monomeren, wie Acrylnitril, Methacrylnitril, N,N-Dimethylacrylamid, Vinylpyridin, Vinylacetat sowie weitere wasserlösliche polymerisationsfähige Säuren und ihre Salze, insbesondere die Malein-, Fumar-, Itacon-, Vinylsulfon- oder Acrylamidomethylpropansulfonsäure; ferner hydroxygruppenhaltige Ester polymerisationsfähiger Säuren, insbesondere die Hydroxyethyl- und hydroxypropylester der Acryl- und der Methacrylsäure verwendet werden können; weiter aminogruppenhaltige und ammoniumgruppenhaltige Ester und Amide polymerisationsfähiger Säuren wie die Dialkylaminoester, insbesondere die Dimethyl- und die Diethylaminoalkylester der Acryl- und der Methacrylsäure, sowie die Trimethyl- und Trimethylammoniumalkylester sowie die entsprechenden Amide. Die vorstehenden Monomeren können allein zu Homopolymerisaten oder untereinander gemischt zu Mischpolymerisaten polymerisiert werden. In geringen Mengen können noch zusätzlich wasserunlösliche Monomere mit den vorstehenden Monomeren copolymerisiert werden wie die Ester der Acryl- und/oder Methacrylsäure mit C₁-C₁₀-Alkoholen, Styrol und alkylierte Styrole. Im allgemeinen liegt der Anteil an den wasserlöslichen Monomeren bei 60 bis 100 Gew%, bezogen auf die Gesamtheit der Monomeren. Die wasserunlöslichen (hydrophoben) Monomeren machen in der Regel 0 bis 40 Gew% der Monomeren aus.

Zusammen mit den o.g. Monomeren können noch in geringen Anteilen vernetzende Monomere wie z.B. Monomere mit mehr als einer reaktionsfähiger Gruppe im Molekül polymerisiert werden. Dabei entstehen teilvernetzte Polymerisate, die nicht mehr in Wasser löslich sondern nur quellbar sind. Als vernetzende Monomere seien bi- oder mehrfunktionelle Monomere, z.B. Amide wie das Methylenbisacryl- bzw. -methacrylamid oder Ethylenbisacrylamid, ferner Ester von Polyolen und alkoxylierten Polyolen, wie Diacrylate oder Triacrylate z.B. Butandiol- oder Ethylenglykoldiacrylat, Polyglykol-di(meth)acrylate, Trimethylolpropantriacrylat, Di- und Triacrylatester des, vorzugsweise mit 1 bis 30 Mol Alkylenoxid oxalkylierten (ethoxylierten) Trimethylolpropans, Acrylat- und Methacrylatester von Glycerin und Pentaerythrit, sowie des mit vorzugsweise 1 bis 30 Mol Ethylenoxid oxethylierten Glycerins und Pentaerythrits, ferner Allylverbindungen wie Allyl(meth)acrylat, alkoxyliertes Allyl(meth)acrylat mit vorzugsweise 1 bis 30 Mol Ethylenoxid umgesetzt, Triallylcyanurat, Maleinsäurediallylester, Polyallylester, Tetraallyloxiethan, Triallylamin, Tetraallylethylendiamin, Allylester der Phosphorsäure bzw. phosphorigen Säure, ferner vernetzungsfähige Monomere, wie die N-Methylolverbindungen von Amiden wie dem Methacrylamid bzw. Acrylamid und die davon abgeleiteten Äther. Der Anteil an den vernetzenden Comonomeren liegt bei 0 bis 10 Gew%, bevorzugt bei 0,01 bis 3,0 Gew%, bezogen auf die Gesamtheit der Monomeren.

Die wasserabsorbierenden polymeren Absorptionsmittel werden unter Verwendung von mindestens einem Vernetzer erhalten. Als Vernetzer werden solche Verbindungen verwendet, die mindestens 2 oder mehr funktionelle Gruppen (Doppelbindungen, Epoxygruppen) enthalten und in der Lage sind, sich während der Polymerisation in die wachsenden Polymerketten einzubauen. Damit entstehen im Polymerisat an verschiedenen Stellen Vernetzungspunkte, die die einzelnen Polymerketten zusammenhalten und bewirken, daß in einer Flüssigkeit die Polymerpartikel nur quellen können und sich nicht in der Flüssigkeit auflösen. Durch die chemische Struktur des Vernetzers, die Anzahl der Vernetzungsstellen, aber auch durch ihre Verteilung in den Polymerketten werden die Eigenschaften des vernetzten Polymeren bestimmt. Bei optimalem Einbau des Vernetzers in das Polymerisat entstehen vernetzte Polymerisate, die die Vernetzungsstellen gleichmäßig verteilt haben, so daß kaum nichtvernetzte Regionen oder sogar unvernetzte (d.h. wasserlösliche) niedermolekulare Anteile im Polymerisat vorhanden sind. Eine gleichmäßige Verteilung der Vernetzungsstellen im Polymerisat führt zu einem Produkt, daß auch ein optimales Rückhaltevermögen für wäßrige Flüssigkeiten, sowie eine optimale Gelfestigkeit im gequollenen Zustand aufweist.

Die Polymerisation wird bevorzugt in wäßriger Lösung diskontinuierlich in einem Polymerisationsgefäß oder kontinuierlich auf einem endlosen Band, z B. gemäß DE 35 44 770, durchgeführt. Bei einem praktisch adiabatischen Verlauf der Polymerisation entsteht bei entsprechender Anfangskonzentration von 15 bis 50 Gew% der Monomeren ein wäßriges Polymergel. Durch die Wahl der Anfangsmonomerkonzentration und der entsprechenden niedrigen Starttemperatur im Temperaturbereich von 0 bis 50 °C, bevorzugt von 5 bis 25 °C, kann die Polymerisation so geführt werden, daß die Maximaltemperatur im entstehenden wäßrigen Polymergel gut beherrschbar ist.

Das hergestellte Polymerisat wird nach dem erfindungsgemäßen Verfahren bei einer Temperatur von 120 - 240°C, bevorzugt bei 140 - 180°C erwärmt, um den niedrigen Restmonomergehalt zu erzielen. Dabei ist zu beachten, daß nicht durch eine übermäßig hohe Temperatur oder Zeit andere, wesentliche Produkteigenschaften des Polymerisates geschädigt werden. Der optimale Zeitbedarf für die Erwärmung hängt von der Konzentration der Stickstoffverbindung und der Höhe der Temperatur ab und kann mit wenigen Versuchen ermittelt werden. In den meisten Fällen ist ein Zeitraum zwischen 10 Minuten und 2 Stunden ausreichend, bevorzugt zwischen 10 Min. und 1 Stunde.

Die Polymerisate werden in die für die verschiedenen Anwendungen erforderlichen Siebfraktionen aufgeteilt. Beispielsweise sind für die Anwendung von vernetzten Polymerisaten als Absorber im Hygienebereich Kornverteilungen von 0,2 bis 1 mm bevorzugt, im Agrarbereich werden bevorzugt Produkte im Bereich 0,2 bis 3 mm und für die löslichen Polymere im Flockungsmittelbereich bevorzugt Produkte im Bereich von 0,1 bis 1,2 mm angewandt.

Der niedrige Restmonomergehalt bringt den erfindungsgemäßen Polymerisaten gegenüber den bekannten und nach dem Stand der Technik hergestellten Polymeren folgende Vorteile:
1. Die Polymerisate können zur Herstellung von solchen Absorptionsmaterialien verwendet werden, bei welchen ein extrem niedriger Restmonomergehalt aus toxikologischen Gründen, wie z.B. bei den Superabsorptionsmitteln für Hygieneindustrie (Windeln, Inkontinenzprodukte), Lebensmittelindustrie (Verpackungen), bei Bodenverbesserungsmitteln usw., verlangt wird.
2. Die Polymerisate können auch zur gesteuerten Abgabe der in das Polymerisat nachträglich eingebundenen oder im Polymerisat enthaltenen weiteren Substanzen an andere Körper, wie z.B. beim Dosieren von Arzneimitteln in der Humanmedizin, beim Dosieren der Nährstoffe (Düngemitteleffekt) an Pflanzen, Insektizidmitteln und Herbiziden in wäßrigem Medium, bevorzugt auf großen Wasserflächen, verwendet werden, ohne daß größere Mengen an toxikologisch bedenklichen Restmonomeren in die Umwelt gelangen.
3. unvernetzte, wasserlösliche Polymerisate mit niedrigem Restmonomergehalt können auch für solche Anwendungen eingesetzt werden, wo aus toxikologischen Gründen extrem niedrige Restmonomergehalte verlangt werden, wie bei Trinkwasseraufbereitung, bei der Verwendung als Verdickungsmittel in der Lebensmittelindustrie, Dosieren von Arzneimitteln usw.

Die Einbindung von Nährstoffen für Pflanzen, Herbiziden, Insektizidmitteln, Desinfektionsmitteln, Arzneimitteln, antibakteriellen Mitteln, sowie von anderen Substanzen in das Polymerisat kann durch Zusatz dieser Verbindungen direkt zur Monomerlösung erfolgen, wenn der Polymerisationsverlauf dadurch nicht gestört wird. Wenn aber diese Substanzen die Polymerisation beeinflussen, dann muß ihre Einbindung erst während der Polymerisation oder nach der beendeten Polymerisation durch eine Einarbeitung von diesen Substanzen in das bereits hergestellte Polymergel z.B. nach den DE 40 29 591, DE 40 29 592 oder DE 40 29 593 erfolgen.

### Beispiele

### Bestimmung des Aufnahmevermögens

In ein 250 ml Becherglas mit 200 ml Fertilizer-Lösung* wird unter Rühren 1 g Polymer gegeben. Nach einer Rührzeit von 15 Minuten wird der Magnetrührer abgestellt und 45 Minuten stehengelassen. Der Inhalt des Becherglases wird sodann über ein Sieb mit der Maschenweite 0,3 mm geschüttet, wobei das durch die Fertilizer-Lösung gequollene Polymer auf dem Sieb verbleibt. Aus der Differenz zwischen der ursprünglich eingesetzten Lösungsmenge von 200 ml und der Menge an Lösung, die das Sieb passiert hat, errechnet man die durch das Polymer absorbierte Menge Fertilizer-Lösung in ml/g Polymer.
* : Peters® Professional Fertilizer, Fa. Grace-Sierra Horticultural Products Comp., Pennsylvania, USA

### Bestimmung des Restmonomergehaltes

Die Restmonomerbestandteile Acrylamid und Acrylsäure werden an wäßrigen Auszügen der Polymere durch HPLC mit internen Standards ermittelt.

### Beispiel 1

In einem Polymerisationsgefäß wurden zunächst in 275 g Wasser 0,9 g Methylenbisacrylamid gelöst und mit 301 g Acrylsäure vermischt. Danach wurde die Monomerlösung mit 168 g Natronlauge (50 %ig) und 118 g Ammoniak (25 %ig) neutralisiert, auf 10 °C gekühlt und mit Stickstoff ausgeblasen. Nach der Zugabe der Initiatorlösungen (1,0 g Natriumperoxidisulfat, 0,2 g 2,2'-Azobis(2-methylpropionamidin)dihydrochlorid in je 20 ml Wasser und 0,05 g Irgacure® 651 (Photoinitiator, Fa. Ciba Geigy) in 2 g Acrylsäure) wurde die Polymerisation mit UV-Licht gestartet. Eine gute Durchmischung der Initiatorlösungen mit der Monomerlösung ist eine Voraussetzung für eine homogene Polymerisation im ganzen Polymerblock. Die Maximaltemperatur von 103 °C (in einem gut isolierten Polymerisationsgefäß) wurde innerhalb von 15 Minuten erreicht. Nach der beendeten Polymerisation wurde das Polymer, bei 160 °C für 1,5 h erwärmt und auf die gewünschte Kornfraktion gemahlen. Es entstand ein vernetztes Acrylsäurehomopolymerisat als Natrium/Ammonium-Salz. Die abgesiebte Kornfraktion 200 bis 1000 µm wurde für weitere Untersuchungen verwendet: Das Aufnahmevermögen betrug 103 ml/g an 0,1 %iger Fertilizer Lösung und der Restmonomergehalt lag bei 20 ppm Acrylsäure.

### Beispiel 2

Unter ähnlichen Bedingungen wie im Beispiel 1 wurden in 275 g Wasser 0,6 g Methylenbisacrylamid gelöst und mit 301 g Acrylsäure vermischt. Danach wurde die Monomerlösung mit 261 g Kalilauge (50 %ig) und 118 g Ammoniak (25 %ig) neutralisiert, auf 10 °C gekühlt und mit Stickstoff ausgeblasen. Nach der Zugabe der Initiatorlösungen wie im Beispiel 1 wurde die Polymerisation mit UV-Licht gestartet. Die Maximaltemperatur von 102 °C wurde innerhalb von 10 Minuten erreicht. Nach der beendeten Polymerisation wurde das Polymer bei 180 °C für 1,5 h erwärmt und auf die gewünschte Kornfraktion gemahlen. Es entstand ein vernetztes Acrylsäurehomopolymerisat als Kalium/Ammonium-Salz. Die abgesiebte Kornfraktion 200 bis 1000 µm wurde für weitere Untersuchungen verwendet: Das Aufnahmevermögen betrug 110 ml/g an 0,1 %iger Fertilizer Lösung und der Restmonomergehalt lag bei 12 ppm Acrylsäure.

### Beispiel 3

In einem Polymerisationsgefäß wurden zunächst in 290 g Wasser 0,6 g Methylenbisacrylamid gelöst, mit 208 g Acrylsäure und 223 g Acrylamidlösung (40 %ig) vermischt. Danach wurde die Monomerlösung mit 180 g Kalilauge (50 %ig) und 39,3 g Ammoniak (25 %ig) neutralisiert, auf 10 °C gekühlt und mit Stickstoff ausgeblasen. Nach der Zugabe der Initiatorlösungen wie im Beispiel 1 wurde die Polymerisation mit UV-Licht gestartet. Die Maximaltemperatur von 104 °C wurde innerhalb von 8 Minuten erreicht. Nach der beendeten Polymerisation wurde das Polymer bei 160 °C für 1,5 h erwärmt und auf die gewünschte Kornfraktion gemahlen. Es entstand ein vernetztes Acrylsäure/Acrylamid-Copolymerisat als Kalium/Ammonium-Salz. Die abgesiebte Kornfraktion 200 bis 1000 µm wurde für weitere Untersuchungen verwendet: Das Aufnahmevermögen betrug 120 ml/g an 0,1 %iger Fertilizer Lösung und der Restmonomergehalt lag bei 10 ppm Acrylsäure und 10 ppm Acrylamid.

### Beispiel 4

Unter ähnlichen Bedingungen wie im Beispiel 3 wurde ein Terpolymerisat aus Acrylamid, Acrylsäure und Acrylamido(2-methylpropan)sulfonsäure (AMPS) im Verhältnis 50/49,3/0,7 Mol% hergestellt. Die Acrylsäure wurde zu 50 % mit Kalilauge und zu 40 % mit Ammoniak (25 %ig) neutralisiert. Nach der beendeten Polymerisation wurde das Polymer bei 140°C bzw. 160°C für 1,5 h erwärmt. Das Aufnahmevermögen betrug 110 bzw. 108 ml/g an 0,1 %iger Fertilizer Lösung und der Restmonomergehalt lag bei 28 ppm Acrylsäure und 9 ppm Acrylamid, bzw. bei 15 ppm Acrylsäure und 7 ppm Acrylamid.

### Beispiel 5

In einem Polymerisationsgefäß wurden in 230 g Wasser 0,6 g Methylenbisacrylamid gelöst, mit 118,6 g Acrylsäure und 446,4 g Acrylamid (40 %ig) vermischt. Danach wurde die Monomerlösung mit 102,6 g Kalilauge (50 %ig) und 46,1 g Ammoniak (25 %ig) neutralisiert, auf 10 °C gekühlt und mit Stickstoff ausgeblasen. Nach der Zugabe der Initiatorlösungen gemäß Beispiel 1 wurde die Polymerisation mit UV-Licht gestartet. Die Maximaltemperatur von 102 °C wurde innerhalb von 8 Minuten erreicht. Nach der beendeten Polymerisation wurde das Polymer bei 160 °C für 1,5 h erwärmt und auf die gewünschte Kornfraktion gemahlen. Es entstand ein vernetztes Acrylsäure/Acrylamid-Copolymerisat als Kalium/Ammonium-Salz. Das Aufnahmevermögen betrug 106 ml/g an 0,1 %iger Fertilizer Lösung und der Restmonomergehalt lag bei 15 ppm Acrylsäure und 10 ppm Acrylamid.

### Beispiel 6 bis 35

In einem Polymerisationsgefäß wurden zunächst in 230 g Wasser 146,5 g Acrylsäure, 372 g Acrylamidlösung (40 %ig) und 6,9 g AMPS vermischt. Zu der Monomerlösung wurden verschiedene Mengen an unterschiedlicher Vernetzer zugegeben, so daß Polymerisate mit unterschiedlichen Vernetzungsgraden entstanden sind. Als Vernetzer wurden Methylenbisacrylamid (MBA), Triallylamin (TAA) und Trimethylolpropan (TNIPTA) alleine oder in der Kombination benutzt. Danach wurde die Monomerlösung entweder mit 128,5 g Kalilauge (45 %ig) und 56g Ammoniak (25 %ig) neutralisiert (Beispiele 6 bis 14) oder mit 126 g Ammoniak bzw. mit 84,2 g Ammoniak (25 %ig) (Beispiele 15 bis 35) neutralisiert, so daß ein Gesamtneutralisationsgrad von 90 %, bzw. 60 % resultierte. Die Monomerlösung wurde dann auf 10 °C gekühlt und mit Stickstoff ausgeblasen.
Nach der Zugabe der Initiatorlösungen gemäß Beispiel 1 wurde die Polymerisation mit UV-Licht gestartet. Die Maximaltemperatur von 102 bis 104 °C wurde innerhalb von 8 bis 12 Minuten erreicht. Nach der beendeten Polymerisation wurde das Polymer bei 140 °C für 1,5 h erwärmt und auf die gewünschte Kornfraktion gemahlen. Es entstanden vernetzte Acrylsäure/Acrylamid/ AMPS-Terpolymerisate als Kalium/Ammonium- bzw. Ammonium-Salze.

Für weitere Untersuchungen wurden abgesiebte Kornfraktionen 200 bis 1000 µm verwendet: Vernetzermengen, Aufnahmevermögen und Restmonomergehalte sind aus der folgenden Tabelle zu entnehmen.

| **Beisp.** | **Vernetzermenge** | | | **Neutralisation** | | **Aufnahmevermögen** | **Restmonomer** | |
|---|---|---|---|---|---|---|---|---|
| | MBA | TMPTA | TAA | KOH | NH₃ | 0,1 % Fertilizer-Lsg | AcA | AcS |
| | (% auf WS) | | | (%) | | (ml/g) | (ppm) | |
| **6** | 0,1 | | | 50 | 40 | 142 | 4 | 15 |
| **7** | 0,25 | | | 50 | 40 | 120 | 5 | 11 |
| **8** | 0,3 | | | 50 | 40 | 112 | 5 | 20 |
| **9** | 0,3 | | | 50 | 40 | 113 | 4 | 25 |
| **10** | 0,5 | | | 50 | 40 | 98 | 6 | 40 |
| **11** | | 0,4 | | 50 | 40 | 157 | 5 | 30 |
| **12** | | 0,8 | | 50 | 40 | 146 | 7 | 25 |
| **13** | 0,1 | 0,2 | | 50 | 40 | 135 | 5 | 30 |
| **14** | 0,1 | | 0,4 | 50 | 40 | 112 | 6 | 25 |
| **15** | 0,2 | | | 0 | 60 | 128 | 8 | 10 |
| **16** | 0,25 | | | 0 | 60 | 120 | 11 | 11 |
| **17** | 0,3 | | | 0 | 60 | 114 | 16 | 11 |
| **18** | 0,4 | | | 0 | 60 | 108 | 13 | 10 |
| **19** | 0,2 | 0,1 | | 0 | 60 | 118 | 20 | 15 |
| **20** | 0,2 | 0,2 | | 0 | 60 | 120 | 37 | 30 |
| **21** | 0,2 | 0,4 | | 0 | 60 | 111 | 19 | 10 |
| **22** | 0,1 | | 0,4 | 0 | 60 | 120 | 6 | 5 |
| **23** | 0,1 | | 0,8 | 0 | 60 | 112 | 5 | 5 |
| **24** | 0,2 | | 0,2 | 0 | 60 | 118 | 16 | 20 |
| **25** | 0,2 | | 0,4 | 0 | 60 | 115 | 20 | 15 |
| **26** | 0,2 | | | 0 | 90 | 130 | 7 | 33 |
| **27** | 0,25 | | | 0 | 90 | 120 | 6 | 15 |
| **28** | 0,3 | | | 0 | 90 | 120 | 8 | 13 |
| **29** | 0,2 | 0,1 | | 0 | 90 | 134 | 7 | 12 |
| **30** | 0,2 | 0,2 | | 0 | 90 | 130 | 8 | 38 |
| **31** | 0,2 | 0,4 | | 0 | 90 | 126 | 9 | 11 |
| **32** | 0,1 | | 0,8 | 0 | 90 | 115 | 9 | 13 |
| **33** | 0,2 | | 0,2 | 0 | 90 | 110 | 7 | 35 |
| **34** | 0,2 | | 0,4 | 0 | 90 | 106 | 9 | 12 |
| **35** | 0,2 | | 0,8 | 0 | 90 | 104 | 11 | 20 |

### Beispiel 36

Die Monomerlösung gemäß Beispiel 6 mit 0,9 g Methylenbisacrylamid wurde mit 128 g Kalilauge (45 %ig) bis zu einem Neutralisationsgrad von 50 % neutralisiert. Nach Zugabe von 25,1 g Ethanolamin wurde die Monomerlösung auf 10 °C gekühlt und mit Stickstoff ausgeblasen. Nach der Zugabe der Initiatorlösungen gemäß Beispiel 1 wurde die Polymerisation mit UV-Licht gestartet. Die Maximaltemperatur von 104°C wurde innerhalb von 8 Minuten erreicht. Nach der beendeten Polymerisation wurde das Polymer bei 160 °C für 1,5 h erwärmt und auf die gewünschte Kornfraktion gemahlen. Das Aufnahmevermögen betrug 48 ml/g an 0,1 %iger Fertilizer Lösung und der Restmonomergehalt lag bei 20 ppm Acrylsäure und 17 ppm Acrylamid.

### Beispiel 37

Die Monomerlösung gemäß Beispiel 6 mit 0,9 g Methylenbisacrylamid wurde mit 120 g Kalilauge (45 %ig) bis zu einem Neutralisationsgrad von 50 % neutralisiert. Nach Zugabe von 50,2 g Ethanolamin wurde die Monomerlösung auf 10 °C gekühlt und mit Stickstoff ausgeblasen. Nach der Zugabe der Initiatorlösungen gemäß Beispiel 1 wurde die Polymerisation mit UV-Licht gestartet. Die Maximaltemperatur von 104 C wurde innerhalb von 6 Minuten erreicht. Nach der beendeten Polymerisation wurde das Polymer bei 160 °C für 1,5 h erwärmt und auf die gewünschte Kornfraktion gemahlen. Das Aufnahmevermögen betrug 46 ml/g an 0,1 %iger Fertilizer Lösung und der Restmonomergehalt lag bei 20 ppm Acrylsäure und 11 ppm Acrylamid.

### Beispiel 38

In einem Polymerisationsgefäß wurden zunächst in 260 g Wasser 148 g Acrylsäure, 372 g Acrylamidlösung (40 %ig), 0,6 g Methylenbisacrylamid und 1,2 g Triallyamin gelöst.

Danach wurde die Monomerlösung mit 126 g Ammoniak (25 %ig) bis zu einem Neutralisationsgrad von 90 % neutralisiert. Die Monomerlösung wurde dann auf 10 °C gekühlt und mit Stickstoff ausgeblasen. Nach der Zugabe der Initiatorlösungen (0,8 g ABAH, 1,0 g Natriumperoxidisulfat, 0,2 g Wasserstoffperoxid und 0,05 g Ascorbinsäure in je 5 ml Wasser) wurde die Polymerisation gestartet. Die Maximaltemperatur von 100°C wurde innerhalb von 10 Minuten erreicht. Nach der beendeten Polymerisation wurde das Polymer bei 140°C für 1,5 h erwärmt und auf die gewünschte Kornfraktion gemahlen. Es entstand ein vernetztes Acrylsäure/Acrylamid-Copolymerisat als Ammonium-Salz. Das Aufnahmevermögen betrug 132 ml/g an 0,1 %iger Fertilizer Lösung und der Restmonomergehalt lag bei 10 ppm Acrylamid und 25 ppm Acrylsäure.

### Beispiel 39

In einem Polymerisationsgefäß wurden zunächst in 300 g Wasser und 146 g Acrylsäure mit 372 g Acrylamidlösung (40 %ig) und 14 g AMPS (50%ig) vermischt. Danach wurde die Monomerlösung mit 126 g Ammoniak (25 %ig) bis zu einem Neutralisationsgrad von 90 % neutralisiert. Die Monomerlösung wurde dann auf 10 °C gekühlt und mit Stickstoff ausgeblasen. Nach der Zugabe der Initiatorlösungen gemäß Beispiel 1 wurde die Polymerisation mit UV-Licht gestartet. Die Maximaltemperatur von 100 C wurde innerhalb von 10 Minuten erreicht. Nach der beendeten Polymerisation wurde das Polymer bei 140°C für 1,5 h erwärmt und auf die gewünschte Kornfraktion gemahlen. Es entstand ein hochmolekulares, wasserlösliches Acrylsäure/Acrylamid-Copolymerisat mit einem Restmonomergehalt von 3 ppm Acrylsäure und 5 ppm Acrylamid. Eine 0,1%ige wäßrige Lösung des Polymers hatte eine Brookfieldviskosität von 400 mPas.

### Beispiel 40

In einem Polymerisationsgefaß wurden zunächst in 493 g Wasser mit 146 g Acrylsäure vermischt. Danach wurde die Monomerlösung mit 168 g Ammoniak (25 %ig) bis zu einem Neutralisationsgrad von 60 % neutralisiert. Die Monomerlösung wurde dann auf 10 °C gekühlt und mit Stickstoff ausgeblasen. Nach der Zugabe der Initiatorlösungen gemäß Beispiel 1 wurde die Polymerisation mit UV-Licht gestartet. Die Maximaltemperatur von 102 C wurde innerhalb von 10 Minuten erreicht. Nach der beendeten Polymerisation wurde das Polymer bei 140°C für 1,5 h erwärmt und auf die gewünschte Kornfraktion gemahlen. Es entstand ein hochmolekulares, wasserlösliches Acrylsäurepolymerisat mit einer Brookfield-Viskosität der 0,1%igen Lösung von 240 mPas und mit einem Restmonomergehalt von 11 ppm Acrylsäure.

### Beispiel 41

Das Beispiel 40 wurde wiederholt, jedoch erfolgte die Erwärmung des Polymers nicht bei 140°C sondern bei 160°C. Das Polymerisat wies eine Brookfield-Viskosität von 350 mPas auf und der Restmonomergehalt betrug 18 ppm Acrylsäure.

## Patentansprüche

1. Verfahren zur Herstellung wasserlöslicher bzw. wasserquellbarer synthetischer Polymerisate durch radikalische Polymerisation von mit basischen Stickstoffverbindungen teilweise- oder völlig neutralisierten Acrylsäure- und/oder Acrylsäurederivaten in wäßriger Lösung, **dadurch gekennzeichnet, daß** die Neutralisation der sauren Monomerkomponente mit der Stickstoffverbindung bis zu einem Neutralisationsgrad von 10 bis 100 % durchgeführt wird und durch eine nachträgliche Erwärmung der Polymerisate bei einer Temperatur von 120 bis 240°C sehr niedrige Restmonomergehalte erhalten werden.

2. Verfahren nach Anspruch 1, **dadurch gekennzeichnet, daß** als Stickstoffverbindung Ammoniak, Ammoniumhydroxid, Hydroxylamin, Alkanolamine oder Alkylamine bzw. deren Gemische verwendet werden.

3. Verfahren nach Anspruch 1 und 2, **dadurch gekennzeichnet, daß** als Stickstoffverbindung bevorzugt Ammoniak, Ammoniumhydroxid, Mono- oder Diethanolamin verwendet werden.

4. Verfahren nach Anspruch 1 bis 3 **dadurch gekennzeichnet, daß** Monomere auf Basis der Acrylsäure, Methacrylsäure oder Derivaten dieser Carbonsäuren polymerisiert werden, vorzugsweise als Homo- oder Copolymerisate der Acryl-, Methacrylsäure, Acrylamidopropansulfonsäure, den Alkali- oder Ammoniumsalzen dieser Carbonsäuren, des Acryl- oder Methacrylamids und deren Derivaten, des Vinylpyrrolidons, sowie als Copolymerisate untereinander oder mit anderen nur teilweise wasserlöslichen Monomeren wie z.B. Vinylacetat verwendet werden.

5. Verfahren nach Anspruch 1 bis 4, **dadurch gekennzeichnet, daß** zusätzlich wenigstens ein Vernetzer auf Basis eines bi- oder polyfunktionellen Monomers verwendet wird.

6. Verfahren nach Anspruch 1 bis 5, **dadurch gekennzeichnet, daß** das Polymerisat bei einer Temperatur von 140 bis 180°C erwärmt wird.

7. Verfahren nach Anspruch 1 bis 6, **dadurch gekennzeichnet, daß** Polymerisate mit einem Gehalt an Restmonomer von kleiner 50 ppm, bevorzugt kleiner 30 ppm entstehen.

8. Verfahren nach Anspruch 1 bis 7, **dadurch gekennzeichnet, daß** Polymerisate mit einem Restgehalt an Acrylamid von kleiner 10 ppm entstehen.

## Claims

1. Process for preparing synthetic polymers which are soluble or capable of swelling in water, by radical polymerisation of acrylic acid and/or acrylic acid derivatives which have been partly or totally neutralised with basic nitrogen compounds, in an aqueous solution, **characterised in that** the neutralisation of the acid monomer component with the nitrogen compound is carried out up to a neutralisation level of 10 to 100% and very low residual monomer contents are obtained by subsequent heating of the polymers to a temperature of 120 to 240°C.

2. Process according to claim 1, **characterised in that** ammonia, ammonium hydroxide, hydroxylamine, alkanolamines or alkylamines or mixtures thereof are used as the nitrogen compound.

3. Process according to claims 1 and 2, **characterised in that** ammonia, ammonium hydroxide, mono- or diethanolamine is preferably used as the nitrogen compound.

4. Process according to claims 1 to 3, **characterised in that** monomers based on acrylic acid, methacrylic acid or derivatives of these carboxylic acids are polymerised, and are preferably used as homo- or copolymers of acrylic acid, methacrylic acid, acrylamidopropanesulphonic acid, the alkali metal or ammonium salts of these carboxylic acids, of acrylamide or methacrylamide and the derivatives thereof, of vinylpyrrolidone, and as copolymers with one another or with other only partially water-soluble monomers such as vinyl acetate, for example.

5. Process according to claims 1 to 4, **characterised in that** in addition at least one crosslinker based on a bi- or polyfunctional monomer is used.

6. Process according to claims 1 to 5, **characterised in that** the polymer is heated to a temperature of 140 to 180°C.

7. Process according to claims 1 to 6, **characterised in that** polymers with a content of residual monomer of less than 50 ppm, preferably less than 30 ppm, are obtained.

8. Process according to claims 1 to 7, **characterised in that** polymers with a residual content of acrylamide of less than 10 ppm are obtained.

## Revendications

1. Procédé de fabrication de polymères synthétiques solubles dans l'eau, respectivement gonflables dans l'eau par polymérisation radicalaire d'acide acrylique et/ou de dérivés d'acide acrylique en solution aqueuse, neutralisés partiellement ou entièrement par des composés azotés basiques,
**caractérisé en ce que**
la neutralisation des composants monomères acides avec le composé azoté est réalisée jusqu'à un degré de neutralisation de 10 à 100 %, et on obtient par un chauffage du polymère à une température de 120 à 240°C, des teneurs très faibles en monomères résiduels.

2. Procédé selon la revendication 1,
**caractérisé en ce que**
comme composé azoté, on utilise de l'ammoniac, de l'hydroxyde d'ammonium, de l'hydroxylamine, de l'alkanolamine ou de l'alkylamine, ou leurs mélanges sont utilisés.

3. Procédé selon les revendications 1 et 2,
**caractérisé en ce que**
comme composé azoté, on utilise de préférence de l'ammoniac, de l'hydroxyde d'ammonium, de la mono ou diéthanolamine.

4. Procédé selon les revendications 1 à 3,
**caractérisé en ce que**
des monomères à base d'acide acrylique, d'acide méthacrylique ou de dérivés de ces acides carboxyliques sont polymérisés, en utilisant de préférence comme homo ou copolymères de l'acide acrylique, méthacrylique, acrylamidopropane-sulfonique, des sels alcalins ou d'ammonium de ces acides carboxyliques, de l'acrylamide ou du méthacrylamide et de leurs dérivés, de la vinylpyrrolidone ainsi que comme copolymères entre eux ou avec d'autres monomères seulement partiellement solubles dans l'eau, par exemple l'acétate de vinyle.

5. Procédé selon les revendications 1 à 4,
**caractérisé en ce qu'**
on utilise en outre, au moins un agent de réticulation à base d'un monomère bi ou polyfonctionnel.

6. Procédé selon les revendications 1 à 5,
**caractérisé en ce que**
le polymère est chauffé à une température de 140 à 180°C.

7. Procédé selon les revendications 1 à 6,
**caractérisé en ce qu'**
on obtient des polymères ayant une teneur en monomère résiduel inférieure à 50 ppm, de préférence inférieure à 300 ppm.

8. Procédé selon les revendications 1 à 7,
**caractérisé en ce qu'**
on obtient des polymères ayant une teneur résiduelle en acrylamide inférieure à 10 ppm.
